# EUROPÄISCHE PATENTSCHRIFT

(11) **EP 3 924 589 B1**
(45) Veröffentlichungstag und Bekanntmachung des Hinweises auf die Patenterteilung: **28.06.2023**
(21) Anmeldenummer: 20704521.2
(22) Anmeldetag: 10.02.2020
(51) Int. Cl.: E05F 15/689, E05F 11/48

(54) **KRAFTFAHRZEUGTÜRE**
MOTOR VEHICLE DOOR
PORTIÈRE DE VÉHICULE AUTOMOBILE

(30) Priorität: 12.02.2019 DE 102019201793
(43) Veröffentlichungstag der Anmeldung: 22.12.2021
(73) Patentinhaber: Brose Fahrzeugteile SE & Co. Kommanditgesellschaft, Bamberg, 96052 Bamberg (DE)
(72) Erfinder: TRAUTMANN, Michael, 95512 Neudrossenfeld (DE); HÜMMER, Norman, 96250 Ebensfeld (DE); JAHN, Michael, 96148 Baunach (DE)
(74) Vertreter: Isarpatent
(86) Internationale Anmeldenummer: PCT/EP2020/053312
(87) Internationale Veröffentlichungsnummer: WO 2020/165085

(56) Entgegenhaltungen:
- EP-A1- 1 380 717
- EP-A2- 0 164 693
- JP-A- S61 134 481
- US-A1- 2002 053 168

## Beschreibung

### GEBIET DER ERFINDUNG

Die vorliegende Erfindung betrifft eine Kraftfahrzeugtüre, insbesondere eine Türe mit einem Fensterhebersystem, wie z.B. eine Türe eines Autos.

### TECHNISCHER HINTERGRUND

In Kraftfahrzeugen wie Autos, LKWs oder Bussen sind typischerweise zumindest in einer Fahrertüre und einer Beifahrertüre absenkbare Fensterscheiben vorgesehen. Zum Bewegen der in der Fahrzeugtüre geführten Fensterscheibe sind Fensterhebersysteme in die Fahrzeugtüren integriert. Ein solches Fensterhebersystem weist üblicherweise zwei parallele Führungsschienen auf, an welchen jeweils ein mittels eines Seilantriebs verfahrbarer Mitnehmer geführt ist, wobei die Fensterscheibe an den Mitnehmer gekoppelt ist.

In Kraftfahrzeugen werden Fahrer- oder Beifahrertüren typischerweise zwischen einer so genannten A-Säule und einer so genannten B-Säule des Fahrzeugs angeordnet. Eine Fensteröffnung der Tür ist hierbei zumeist durch eine an der A-Säule gelegene, geneigte vordere Strebe und eine an der B-Säule gelegene hintere Strebe begrenzt. Die Fensterscheibe ist mittels des Fensterhebersystems zwischen einer Schließstellung, in welcher die Scheibe die Fensteröffnung abdeckt, und einer Öffnungsstellung, in welcher die Scheibe die Fensteröffnung zumindest teilweise freigibt bewegbar. Üblicherweise wird die Fensterscheibe entlang der hinteren Strebe zwischen Dichtlippen oder dergleichen über die gesamte Bewegungsbahn zwischen der Öffnungs- und der Schließstellung geführt, während die Fensterscheibe an der vorderen Strebe aufgrund deren Neigung lediglich über einen kleinen Teil der Bewegungsbahn geführt ist. Die auf die Fensterscheibe wirkenden Reibungskräfte sind deshalb im Bereich der hinteren Strebe größer.

Fensterhebersysteme sind daher häufig so aufgebaut, dass eine Zugkraft zum Bewegen der Fensterscheibe in die Schließstellung über ein direkt von einem Seilantrieb angetriebenes Seil auf ein hinteres Gleitstück aufgebracht wird, welches an einer im Bereich der hinteren Strebe angeordneten Führungsschiene geführt ist. Ein vorderes Gleitstück, das an einer im Bereich der vorderen Strebe angeordneten Führungsschiene geführt ist, wird zur Aufbringung einer Zugkraft mittels des Seils an das hintere Gleitstück gekoppelt. Ein solches System ist Beispielsweise in dem Deutschen Gebrauchsmuster DE 20 2011 051 781 U1 oder in der Deutschen Patentanmeldung DE 37 27 153 A1 beschrieben.

In dem Europäischen Patent EP 1 778 942 B1 ist beschrieben, die Zugkraft von dem Seilantrieb auf das Gleitstück aufzubringen, das an der an der vorderen Strebe angeordnete Führungsschiene geführt ist. Ein ähnliches System zum Bewegen eines Rollos an einer Fahrzeugtüre wird in dem Deutschen Gebrauchsmuster DE 20 2004 014 652 U1 beschrieben.

Das Dokument US 2002/0053168 A1 beschreibt weiterhin eine Kraftfahrzeugtür mit einem Fensterhebersystem, dem mittels einer Antriebseinheit eine Zugkraft direkt auf einen Mitnehmer aufgebracht wird, der an einer im Bereich der B-Säule angeordneten hinteren Führungsschiene geführt ist. Die Antriebseinheit ist nahe einer im Bereich der A-Säule angeordneten vorderen Führungsschiene angeordnet, wobei die Antriebseinheit in Bezug auf die Längserstreckung der vorderen Führungsschiene etwa mittig Positioniert ist. Ein durch die Antriebseinheit angetriebenes Antriebsseil ist zwischen einem oberen Ende der hinteren Führungsschiene und der Antriebseinheit selbst in einer Hülse geführt.

Da Fensterhebersysteme in Kraftfahrzeugtüren häufig hohen Temperaturschwankungen ausgesetzt sind und weiterhin beim Bewegen der Fensterscheibe hohe Kräfte auf den Seilantrieb wirken, kann es im Laufe der Zeit zu Setzungsprozessen der Seilkomponenten oder ähnlichen Erscheinungen kommen, welche die Positionierbarkeit der Gleitstücke bzw. Mitnehmer an der jeweiligen Führungsschiene beeinträchtigen. Dies kann dazu führen, dass die Fensterscheibe nicht mehr zuverlässig in die Schließstellung gebracht wird.

Dies ist ein Zustand, den es zu verbessern gilt.

### ZUSAMMENFASSUNG DER ERFINDUNG

Vor diesem Hintergrund liegt der vorliegenden Erfindung die Aufgabe zugrunde, ein verbessertes Fensterheberkonzept für ein Kraftfahrzeug bereitzustellen.

Erfindungsgemäß wird diese Aufgabe durch eine Kraftfahrzeugtüre mit den Merkmalen des Patentanspruchs 1 gelöst.

Demgemäß ist eine Kraftfahrzeugtüre mit einem Rahmen, einem Fensterhebersystem und einer Scheibe vorgesehen.

Der Rahmen definiert eine Fensteröffnung, die in Bezug auf eine Türlängsrichtung durch eine erste Strebe und eine beabstandet zu dieser angeordnete zweite Strebe begrenzt ist. Beim Einbau der Türe in ein Fahrzeug ist die erste Strebe zur Anordnung im Bereich der A-Säule und die zweite Strebe ist zur Anordnung im Bereich der B-Säule des Fahrzeugs vorgesehen.

Das Fensterhebersystem umfasst eine in Bezug auf die Türlängsrichtung im Bereich der ersten Strebe angeordneten erste Führungsschiene, ein an der ersten Führungsschiene geführtes erstes Gleitstück, eine in Bezug auf die Türlängsrichtung im Bereich der zweiten Strebe angeordnete zweite Führungsschiene, ein an der zweiten Führungsschiene geführtes zweites Gleitstück, eine Seiltrommel und ein mittels der Seiltrommel antreibbares und an die Gleitstücke gekoppeltes Antriebsseil. Das Antriebsseil ist zwischen einem oberen Endbereich der zweiten Führungsschiene und einem Anschlussbereich der ersten Führungsschiene in einer Bowdenzughülle geführt.

Der Anschlussbereich der ersten Führungsschiene ist zwischen einem oberen Endbereich der ersten Führungsschiene und einem unteren Endbereich der ersten Führungsschiene gelegen. Die Bowdenzughülle ist jeweils im oberen Endbereich der zweiten Führungsschiene und im Anschlussbereich der ersten Führungsschiene befestigt. Demnach ist das Antriebsseil zwischen der ersten und der zweiten Führungsschiene abschnittsweise in einer Bowdenzughülle geführt, wobei die Bodenzughülle am oberen Ende der zweiten Führungsschiene und an einer in Bezug auf die Längserstreckung der ersten Führungsschiene zwischen dem oberen und dem unteren Endbereich der ersten Führungsschiene gelegenen Anbringungsstelle befestigt. Der Anschlussbereich kann beispielsweise durch eine einstückig mit der ersten Führungsschiene ausgebildete Montagestruktur wie ein Ansatz oder Vorsprung realisiert sein.

Der obere oder erste und der untere oder zweite Endbereich der ersten Führungsschiene liegen in Bezug auf eine Schienenlängsrichtung der ersten Führungsschiene entgegengesetzt zueinander. Der obere oder erste und ein unterer oder zweiter Endbereich der zweiten Führungsschiene liegen in Bezug auf eine Schienenlängsrichtung der zweiten Führungsschiene entgegengesetzt zueinander. Die Führungsschienen erstrecken sich vorzugsweise parallel zueinander.

Die Fensterscheibe ist an die Gleitstücke des Fensterhebersystems gekoppelt, insbesondere kinematische gekoppelt bzw. an den Gleitstücken befestigt. Die Fensterscheibe weist eine Hinterkante auf, welche entlang der zweiten Strebe geführt ist, und eine schräg zu der Hinterkante verlaufende Vorderkante. Die Vorderkante kann insbesondere zumindest abschnittsweise schräg zu der Hinterkante verlaufen. Dies umfasst auch einen gekrümmten Verlauf der Vorderkante, wobei eine Tangente an die Vorderkante schräg bzw. geneigt zu der Hinterkante verläuft.

Die Fensterscheibe ist mittels der Gleitstücke in eine Schließposition bewegbar, in welcher die Fensterscheibe die Fensteröffnung abdeckt. In der Schließposition der Fensterscheibe das erste Gleitstücke im oberen Endbereich der ersten Führungsschiene und das zweite Gleitstück im oberen Endbereich der zweiten Führungsschiene angeordnet ist. Die oberen Endbereiche der ersten und der zweiten Führungsschiene sind jeweils der Fensteröffnung zugewandt gelegen.

Eine der vorliegenden Erfindung zugrunde liegende Idee besteht darin, das Antriebsseil zwischen der zweiten Führungsschiene und der ersten Führungsschiene in einer Bowdenzughülle zu führen und die Bowdenzughülle im Bereich des oberen Endes der zweiten Führungsschiene und in einem Mittelbereich oder Anschlussbereich der ersten Führungsschiene, der zwischen dem oberen und dem unteren Endbereich der ersten Führungsschiene liegt, zu befestigen. Dadurch wird die Länge der Bowdenzughülle im Vergleich zu einer diagonalen Führung, bei welcher die Bowdenzughülle im oberen Endbereich der zweiten Führungsschiene und im unteren Endbereich der ersten Führungsschiene befestigt ist, verkürzt. Somit wird eine Längenänderung der Bowdenzuhülle infolge von Setzungsprozessen verringert. Folglich werden auch sich durch die Setzung bildende Seillosen verkürzt. Auf diese Weise kann die Fensterscheibe bei Aufbringung der Zugkraft über das von der Seiltrommel angetriebene Antriebsseil auf das an der ersten Führungsschiene geführte Gleitstück, an welches der Bereich der Fensterscheibe mit der geneigten Vorderkante gekoppelt ist, zuverlässig in die Schließposition gebracht werden. Insbesondere wird somit die Lebensdauer des Fensterhebersystems verlängert bzw. die Zuverlässigkeit des Fensterhebersystems über die Lebensdauer der Kraftfahrzeugtüre verbessert.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform der Türe ist vorgesehen, dass ein erster Seilabschnitt des Antriebsseils an das erste Gleitstück gekoppelt ist, über einen im oberen Endbereich der ersten Führungsschiene angeordneten oberen ersten Seilumlenker zu der Seiltrommel und von dieser über einen in einem unteren Endbereich der zweiten Führungsschiene angeordneten unteren zweiten Seilumlenker zu dem zweiten Gleitstück geführt ist und an das zweite Gleitstück gekoppelt ist.

Weiterhin kann vorgesehen sein, dass ein zweiter Seilabschnitt des Antriebsseils an das zweite Gleitstück gekoppelt ist, über einen im oberen Endbereich der zweiten Führungsschiene angeordneten oberen zweiten Seilumlenker und über einen im unteren Endbereich der ersten Führungsschiene angeordneten unteren ersten Seilumlenker zu dem ersten Gleitstück geführt ist und an das erste Gleitstück gekoppelt ist. Wenn über den ersten Seilabschnitt durch Drehen der Seiltrommel eine Zugkraft auf das erste Gleitstück aufgebracht wird, wird diese Zugkraft vom ersten Gleitstück mittels des zweiten Seilabschnitts als Zugkraft auf das zweite Gleitstück übertragen. Auf diese Weise wird eine effiziente Übertragung der durch die Seiltrommel auf den ersten Seilabschnitt aufgebrachten Zugkraft über das erste Gleitstück auf das zweite Gleitstück erzielt. Da die Bowdenzughülle zwischen dem ersten oberen Seilumlenker und dem ersten unteren Seilumlenker an der ersten Führungsschiene befestigt ist, ergibt sich zwischen dem ersten unterem Seilumlenker und der Befestigungsstelle der Bowdenzughülle an der ersten Führungsschiene ferner eine vorteilhaft straffe Seilführung. Dadurch wird bei Bildung von Seillosen infolge von Setzung der Bowdenzughülle die Zuverlässigkeit, mit der die Fensterscheibe in die Schließposition bewegbar ist, weiter verbessert.

Gemäß einer weiteren Ausführungsform ist vorgesehen, dass die Bowdenzughülle in dem Anschlussbereich in einem Abstand zu dem unteren ersten Seilumlenker angeordnet ist, welcher zwischen 25 Prozent und 75 Prozent eines Abstands zwischen dem oberen ersten Seilumlenker und dem unteren ersten Seilumlenker beträgt. Demnach beträgt ein Abstand in dem die Anbringungsstelle der Bowdenzughülle von dem unteren ersten Seilumlenker beanstandet angeordnet ist, zwischen einem Viertel und drei Viertel des Abstands zwischen dem ersten unteren Seilumlenker und dem zweiten unteren Seilumlenker. In diesem Abstandsbereich wird vorteilhaft eine geringe Seilreibung bei Verkürzung der Bowdenzughülle im Vergleich zu einer diagonalen Befestigung der Bowdenzughülle erzielt.

Vorzugsweise ist die Anbringungsstelle etwas außermittig näher beim ersten oberen Seilumlenker angeordnet, also in einem Abstand zu dem unteren ersten Seilumlenker, welcher zwischen 55 Prozent und 70 Prozent des Abstands zwischen dem oberen ersten Seilumlenker und dem unteren ersten Seilumlenker beträgt. In diesem Bereich wird ein besonders günstiges Verhältnis zwischen Verkürzung der Bowdenzughülle und verringerter Seilreibung erzielt.

Gemäß einer weiteren Ausführungsform ist vorgesehen, dass einer oder mehrere der Seilumlenker als Umlenkrollen ausgebildet sind. Dies bietet den Vorteil, dass die Seilreibung an den Umlenkstellen verringert wird.

Erfindungsgemäß weist die erste Führungsschiene in dem oberen Endbereich einen ersten Anschlag auf und die zweite Führungsschiene weist in dem oberen Endbereich einen zweiten Anschlag, wobei in der Schließposition der Fensterscheibe das zweite Gleitstück an dem zweiten Anschlag anliegt und das erste Gleitstück in einem vorbestimmten Abstand zu dem ersten Anschlag angeordnet ist. Demnach wird lediglich eines der zwei Gleitstücke gegen einen Anschlag gefahren, wenn die an die Gleitstücke gekoppelte Fensterscheibe in die Schließposition bewegt wird. Insbesondere kann die Seillänge eines Seilabschnitts des Antriebsseils, an welches das erste Gleitstück, das in der Schließposition der Fensterscheibe beabstandet zu dem jeweiligen Anschlag angeordnet sein soll, entsprechend ausgelegt sein. Auf diese Weise wird vorteilhaft eine definierte Position der Gleitstücke in der Schließposition der Scheibe festgelegt, wobei gleichzeitig die Übertragung der Zugkraft von dem ersten Gleitstück auf das zweite Gleitstück verbessert wird.

Insbesondere kann vorgesehen sein, dass der vorbestimmte Abstand größer oder gleich 2 mm und kleiner oder gleich 8 mm ist. In diesem Bereich wird eine sichere Reserve für Setzungen bzw. Längenänderungen der Bowdenzughülle vorgesehen. Vorzugsweise ist der vorbestimmte Abstand größer oder gleich 3 mm und kleiner oder gleich 6 mm. Ein besonderer Vorteil dieses Abstandsbereichs liegt darin, dass trotz ausreichend großer Reserve für Setzungen bzw. Längenänderungen der Bowdenzughülle eine Verkippung der Fensterscheibe infolge der bezüglich der Längserstreckung der Führungsschienen unterschiedlichen Position der Gleitstücke klein gehalten wird.

Gemäß einer weiteren Ausführungsform kann der erste Anschlag einstückig mit der ersten Führungsschiene ausgebildet sein. Alternativ oder zusätzlich kann auch der zweite Anschlag einstückig mit der zweiten Führungsschiene ausgebildet sein. Die einteilige Ausbildung des Anschlags mit der jeweiligen Führungsschiene bietet den Vorteil, dass die Anzahl der Einzelteile des Fensterhebersystems verringert wird. Dies erleichtert z.B. die Montage der Kraftfahrzeugtüre.

Gemäß einer weiteren Ausführungsform der Kraftfahrzeugtüre ist vorgesehen, dass die Fensterscheibe an der Hinterkante durch eine Führungsstruktur entlang der zweiten Strebe geführt ist. Die Führungsstruktur kann beispielsweise durch einander gegenüberliegende Lippen gebildet sein, welche einen Führungsschlitz definieren, in den die Hinterkante der Scheibe eingeschoben ist. Die Scheibe liegt vorzugsweise an beiden Lippen an.

Optional erstreckt sich die Führungsstruktur parallel zu der zweiten Führungsschiene.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Darstellung einer Kraftfahrzeugtüre gemäß einem Ausführungsbeispiel der vorliegenden Erfindung; und
- Fig. 2: ein Fensterhebersystem einer Kraftfahrzeugtüre gemäß einem Ausführungsbeispiel der vorliegenden Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist -jeweils mit denselben Bezugszeichen versehen.

### BESCHREIBUNG VON AUSFÜHRUNGSBEISPIELEN

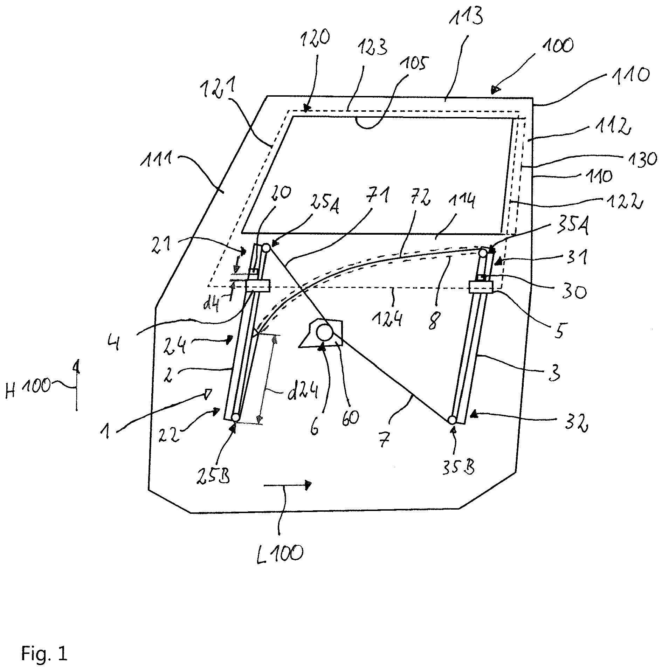

Fig. 1 zeigt beispielhaft und schematisch eine Kraftfahrzeugtür 100 für ein hier nicht dargestelltes Kraftfahrzeug. Die Kraftfahrzeugtüre 100 kann beispielsweise als Fahrertür oder Beifahrertür für ein Auto vorgesehen sein. Die Kraftfahrzeugtür 100 weist einen Rahmen 110, eine Fensterscheibe 120, eine optionale Führungsstruktur 130 sowie ein Fensterhebersystem 1 auf.

Wie in Fig. 1 schematisch dargestellt, weist der Rahmen 100 eine erste Strebe 111, eine zweite Strebe 112, eine Verbindungsstrebe 113 und einen Basisbereich 114 auf. Die erste und die zweite Strebe 111, 112 sind in Bezug auf eine Türlängsrichtung L100 zueinander beabstandet und ortsfest relativ zueinander angeordnet. Die erste Strebe 111 verläuft schräg bzw. angewinkelt relativ zu der zweiten Strebe 112. Die Verbindungsstrebe 113 erstreckt sich entlang der Türlängsrichtung L100 und verbindet die erste und die zweite Strebe 111, 112 in einem oberen Endbereich. Der Basisbereich oder Basisabschnitt 114 ist in Bezug auf eine sich quer zu der Türlängsrichtung L100 erstreckende Türhochrichtung H100 beabstandet zu der Verbindungsstrebe 113 angeordnet und verbindet die erste und die zweite Strebe 111, 112 in einem unteren Endbereich, der entgegengesetzt zu dem oberen Endbereich gelegen ist. Die erste Strebe 111, die zweite Strebe 112, die Verbindungsstrebe 113 und der Basisbereich 114 definieren gemeinsam eine Fensteröffnung 105. Wie in Fig. 1 erkennbar ist, ist die Fensteröffnung 105 in Bezug auf die Türlängsrichtung L100 durch eine erste Strebe 111 und die zweite Strebe 112 und in Bezug auf die Türhochrichtung H100 durch den Basisabschnitt 114 und die Verbindungsstrebe 113 begrenzt. Die Fensteröffnung 105 kann insbesondere einen polygonförmigen Umfang aufweisen, wie dies in Fig. 1 beispielhaft dargestellt ist. Selbstverständlich ist auch denkbar, dass die erste Strebe 111 und die Verbindungsstrebe 113 kontinuierlich ineinander übergehen, beispielsweise indem beide sich derart gekrümmt erstrecken, dass sie gemeinsam einen durchgehenden Bogen bilden.

Die optionale Führungsstruktur 130 ist in Fig. 1 lediglich symbolisch als Strichpunktlinie dargestellt. Wie in Fig. 1 erkennbar, ist die Führungsstruktur 130 an der zweiten Strebe 112 angeordnet und kann insbesondere durch zwei sich entlang der zweiten Strebe 112 erstreckende Lippen (nicht dargestellt) realisiert sein, welche einen Führungsschlitz definieren. Die Lippen können beispielsweise aus einem elastisch verformbaren Material, wie z.B. einem Schaumstoff oder dergleichen hergestellt sein.

Das Fensterhebersystem 1 dient zum Bewegen der Fensterscheibe 120 entlang der Türhochrichtung H100 und wird nachfolgend noch im Detail erläutert.

Die Fensterscheibe 120 weist eine flächige Erstreckung auf, die ausreicht, um die Fensteröffnung 105 des Rahmens 110 vollständig abzudecken. Insbesondere kann die Fensterscheibe 120 eine der ersten Strebe 111 zugewandte Vorderkante 121, eine der zweiten Strebe 112 zugewandte Hinterkante 122, eine die Vorderkante 121 und die Hinterkante 122 verbindende Oberkante 123, welche der Verbindungsstrebe 113 zugewandt ist, und eine in Bezug auf die Türhochrichtung H100 entgegengesetzt zu der Oberkante 123 gelegene Unterkante 124 aufweisen, welche sich ebenfalls zwischen der Vorderkante 121 und der Hinterkante 122 erstreckt, wie dies in Fig. 1 beispielhaft dargestellt ist. Wie in Fig. 1 schematisch dargestellt ist, verläuft die Vorderkante 121 schräg bzw. angewinkelt relativ zu der Hinterkante 122. Ähnlich wie die Fensteröffnung 105 können auch die Vorderkante 121 und die Oberkante 123 der Scheibe 120 als eine einzige durchgehende, vorzugsweise gekrümmte Kante realisiert sein.

In Fig. 1 ist die Fensterscheibe 120 symbolisch als gestrichelte Linie dargestellt, wobei Fig. 1 die Anordnung der Scheibe 120 in einer Schließstellung oder Schließposition zeigt. In der Schließstellung deckt die Fensterscheibe 120 die Fensteröffnung 105 ab, insbesondere vollständig. In einer Öffnungsstellung (nicht dargestellt), gibt die Fensterscheibe 120 die Fensteröffnung 105 zumindest teilweise frei. In der Öffnungsstellung ist die Oberkante 123 der Fensterscheibe 120 in Bezug auf die Hochrichtung H100 beabstandet zu der Verbindungsstrebe 113 angeordnet bzw. ein Abstand zwischen der Oberkante 123 der Fensterscheibe 120 und dem Basisabschnitt 114 ist im Vergleich zu der Schließstellung verringert. Zur Bewegung der Fensterscheibe 120 zwischen der Öffnungs- und der Schließstellung ist die Fensterscheibe 120 an das Fensterhebersystem 1 gekoppelt, z.B. an der Unterkante 124.

Die Hinterkante 122 der Fensterscheibe 120 ist entlang der zweiten Strebe 112 geführt. Insbesondere kann die Hinterkante 122 der Fensterscheibe 120 in der Führungsstruktur 130 geführt sein, z.B. indem die Hinterkante 122 in dem zwischen den Lippen ausgebildeten Schlitz geführt ist. Optional ist die Hinterkante 122 entlang eines gesamten Stellweges, um den die Fensterscheibe 120 bei der Bewegung zwischen der Öffnungs- und der Schließstellung verfahren wird, in der Führungsstruktur 130 geführt.

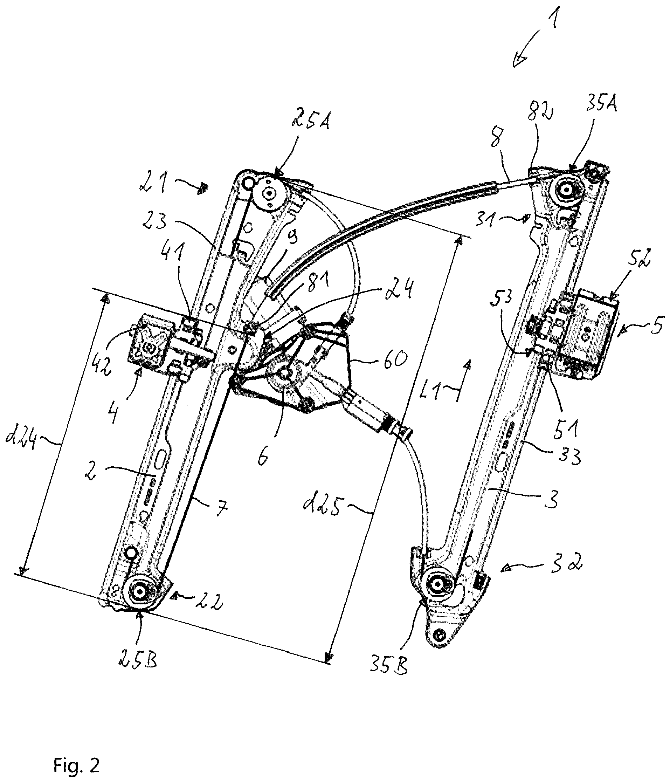

Wie in Fig. 1 schematisch dargestellt ist, weist das Fensterhebersystem 1 eine erste Führungsschiene 2, eine zweite Führungsschiene 3, ein an der ersten Führungsschiene 2 geführtes erstes Gleitstück 4, ein an der zweiten Führungsschiene 3 geführtes zweites Gleitstück 5, eine Seiltrommel 6, ein Antriebsseil 7 und eine in Fig. 1 lediglich symbolisch durch gestrichelte Linien dargestellte Bowdenzughülle 8 auf. Fig. 2 zeigt ein Fensterhebersystem 1 unabhängig von der Kraftfahrzeugtür 100.

Wie insbesondere in Fig. 2 erkennbar ist, können die Führungsschienen 2, 3 als Profilschienen realisiert sein, die sich jeweils in einer Schienenlängsrichtung L1 erstrecken. Die Führungsschienen 2, 3 definieren jeweils eine sich in der Schienenlängsrichtung L1 erstreckende Führungsbahn. Die Führungsbahn kann z.B. jeweils durch einen seitlichen Profilabschnitt 23, 33 der jeweiligen Führungsschiene 2, 3 definiert sein, welcher beispielsweise einen bogenförmigen oder L-förmigen Querschnitt aufweisen kann. Die Führungsschienen 2, 3 können insbesondere aus einem Metallmaterial, wie z.B. einer Aluminiumlegierung hergestellt sein.

Wie in Fig. 1 symbolisch dargestellt, weist die erste Führungsschiene 2 einen ersten Anschlag 20 auf. Der erste Anschlag 20 ist in Bezug auf die Schienenlängsrichtung L1 in einem ersten, oberen Endbereich 21 der ersten Führungsschiene 2 angeordnet. Der erste Anschlag 20 kann beispielsweise als eine L-förmige Ausformung der ersten Führungsschiene 2 realisiert sein. Allgemein kann der erste Anschlag 20 einstückig mit der ersten Führungsschiene 2 ausgebildet sein.

Wie in Fig. 1 weiterhin symbolisch dargestellt ist, weist die zweite Führungsschiene 3 einen zweiten Anschlag 30 auf. Der zweite Anschlag 30 ist in Bezug auf die Schienenlängsrichtung L1 in einem ersten, oberen Endbereich 31 der zweiten Führungsschiene 3 angeordnet. Beispielsweise kann der zweite Anschlag 30 als eine L-förmige Ausformung der zweiten Führungsschiene 3 realisiert sein. Allgemein kann der zweite Anschlag 30 einstückig mit der zweiten Führungsschiene 3 ausgebildet sein.

Das erste Gleitstück 4 ist an der ersten Führungsschiene 2 entlang der Schienenlängsrichtung L1 geführt. Wie in Fig. 2 beispielhaft gezeigt ist, kann das erste Gleitstück 4 einen Führungsabschnitt 41, der mit der Führungsschiene 2, insbesondere mit dem Profilabschnitt 23 in Eingriff steht, aufweisen. Ferner kann ein Kopplungsabschnitt 42 zur Kopplung der Fensterscheibe 120 an das erste Gleitstück 4 und ein Zugabschnitt 43 zur Kopplung des Antriebsseils 7 an das erste Gleitstück 4 vorgesehen sein, wie dies in Fig. 2 beispielhaft dargestellt ist.

Das zweite Gleitstück 5 ist an der zweiten Führungsschiene 3 entlang der Schienenlängsrichtung L1 geführt. Wie in Fig. 2 beispielhaft gezeigt ist, kann das zweite Gleitstück 4 einen Führungsabschnitt 51, der mit der Führungsschiene 3, insbesondere mit dem Profilabschnitt 33 in Eingriff steht, aufweisen. Ferner kann ein Kopplungsabschnitt 52 zur Kopplung der Fensterscheibe 120 an das zweite Gleitstück 5 und ein Zugabschnitt 53 zur Kopplung des Antriebsseils 7 an das zweite Gleitstück 5 vorgesehen sein, wie dies in Fig. 2 beispielhaft dargestellt ist.

Wie in den Fign. 1 und 2 allgemein dargestellt ist, sind die erste und die zweite Führungsschiene 2, 3 beabstandet zueinander angeordnet, wobei sich die Führungsbahn der ersten Führungsschiene 2 und die Führungsbahn der zweiten Führungschiene 3 vorzugsweise parallel zueinander erstrecken. Bei dem in Fig. 1 beispielhaft dargestellten Einbau des Fensterhebersystems 1 in diene Kraftfahrzeugtür 100, ist die erste Führungsschiene 2 im Bereich der ersten Strebe 111 und die zweite Führungsschiene 3 im Bereich der zweiten Strebe 112 angeordnet. Die Führungsschienen 2, 3 erstrecken sich weiterhin entlang der Türlängsrichtung L100, wobei der erste bzw. obere Endbereich 21 der ersten Führungsschiene 2 und der erste bzw. obere Endbereich 31 der zweiten Führungsschiene 3 jeweils der Fensteröffnung 105 zugewandt gelegen sind. Vorzugsweise erstrecken sich die zweite Führungsschiene 3 und die Führungsstruktur 130 parallel zueinander. Allgemein sind die Führungsschienen 2, 3 ortsfest relativ zu der Fensteröffnung 105 bzw. zu dem Rahmen 110 angeordnet.

Wie in Fig. 1 weiterhin schematisch dargestellt ist, ist die Fensterscheibe 120 an die Gleitstücke 4, 5 gekoppelt. Insbesondere kann die Unterkante 124 der Fensterscheibe 120 in der Kopplungsstruktur 42, 52 des jeweiligen Gleitstücks 4, 5 gehalten sein.

Die Seiltrommel 6 ist um eine Drehachse drehbar gelagert. Die Seiltrommel 6 kann beispielsweise an einer Grund- oder Basisplatte 60 drehbar gelagert sein, wie dies in den Fign. 1 und 2 beispielhaft und schematisch dargestellt ist. Die Basisplatte 60 bzw. allgemein die Drehachse der Seiltrommel 6 ist ortsfest relativ zu den Führungsschienen 2, 3 angeordnet. Zum Drehen der Seiltrommel 6 kann beispielsweise ein Elektromotor 9 als Antriebseinrichtung vorgesehen sein. Alternativ ist aber auch denkbar, einen Betätigungshebel (nicht dargestellt) zur manuellen Betätigung der Seiltrommel 6 als Antriebseinrichtung vorzusehen.

Das Antriebsseil 7 ist sowohl an das erste Gleitstück 4 als auch an das zweite Gleitstück 5 gekoppelt. Beispielsweise kann ein erster Seilabschnitt 71 des Antriebsseils 7 an dem Zugabschnitt 43 des ersten Gleitstücks 4 befestigt sein und ein zweiter Seilabschnitt 72 des Antriebsseils 7 kann an dem Zugabschnitt 53 des zweiten Gleitstücks 5 befestigt sein. Ferner ist das Antriebsseil 7 an die Seiltrommel 6 gekoppelt und damit durch die Seiltrommel 6 antreibbar. Beispielsweise kann vorgesehen sein, dass das Seil 7 die Seiltrommel 6 ein oder mehrmals umschlingt und/oder dass das Seil 7 mittels einer Klemmeinrichtung (nicht dargestellt) an der Seiltrommel 6 befestigt ist.

In den Fign. 1 und 2 ist beispielhaft eine mögliche Seilführung des Antriebsseils 7 dargestellt. Insbesondere kann vorgesehen sein, dass der erste Seilabschnitt 71 über einen im oberen Endbereich 21 der ersten Führungsschiene 2 angeordneten oberen ersten Seilumlenker 25A zu der Seiltrommel 6 geführt ist. Von der Seiltrommel 6, an welche der erste Seilabschnitt 71 gekoppelt ist, ist dieser über einen in einem zweiten, unteren Endbereich 32 der zweiten Führungsschiene 3 angeordneten unteren zweiten Seilumlenker 35B zu dem zweiten Gleitstück 5 geführt, an welchem der erste Seilabschnitt 71 ebenfalls befestigt ist. Der zweite, untere Endbereich 32 der zweiten Führungsschiene 3 liegt in Bezug auf die Schienenlängsrichtung L1 entgegengesetzt zu dem ersten, oberen Endabschnitt 31 der zweiten Führungsschiene 3. Der zweite Seilabschnitt 72 des Antriebsseils 7 ist über einen im oberen Endbereich 31 der zweiten Führungsschiene 3 angeordneten oberen zweiten Seilumlenker 35A und über einen in einem zweiten, unteren Endbereich 22 der ersten Führungsschiene 2 angeordneten unteren ersten Seilumlenker 25B zu dem ersten Gleitstück 4 geführt und an das erste Gleitstück 4 gekoppelt. Der zweite, untere Endbereich 22 der ersten Führungsschiene 2 ist in Bezug auf die Schienenlängsrichtung L1 entgegengesetzt zu dem ersten, oberen Endbereich 21 der ersten Führungsschiene 2 gelegen.

Wie insbesondere in Fig. 2 erkennbar ist, können die Seilumlenker 25A, 25B, 35A, 35B jeweils als Umlenkrollen ausgebildet sein. Die Umlenkrollen sind jeweils um eine Drehachse drehbar an der jeweiligen Führungsschiene 2, 3 gelagert.

Durch Drehen der Seiltrommel 6 wird einer der Seilabschnitte 71, 72 verkürzt und der jeweils andere Seilabschnitt 72, 71 wird verlängert. Zum Bewegen der Gleitstücke 4, 5 in Richtung der Anschläg bzw. der ersten Endabschnitte 21, 31 wird durch den ersten Seilabschnitt 71 eine Zugkraft auf das erste Gleitstück 4 ausgeübt. Durch die Kopplung des zweiten Seilabschnitts 72 an das erste Gleitstück 4 wird diese Zugkraft aufgrund der Seilführung über die Seilumlenker 25B, 35A als eine in Richtung des zweiten Anschlags 30 bzw. in Richtung des oberen Endabschnitts 31 der zweiten Führungsschiene 3 wirkende Zugkraft auf das zweite Gleitstück 5 übertragen. Folglich wird eine Zugkraft auf beide Gleitstücke 4, 5 ausgeübt und die Fensterscheibe 120 wird entlang der Führungsschienen 2, 3 verfahren. Allgemein ist das Antriebsseil 7 somit derart geführt, dass mittels der Seiltrommel 6 über den ersten Seilabschnitt 71 eine in Richtung des ersten Anschlags 20 wirkende Zugkraft direkt auf das erste Gleitstück 4 aufbringbar ist und die Zugkraft, zumindest teilweise, über den zweiten Seilabschnitt 72 als in Richtung des zweiten Anschlags 30 wirkende Zugkraft auf das zweite Gleitstück 5 übertragen wird.

Wie in Fig. 1 symbolisch und in Fig. 2 im Detail dargestellt ist, ist der zweite Seilabschnitt 71 zwischen dem oberen Endbereich 31 der zweiten Führungsschiene 3 und einem Anschlussbereich 24 der ersten Führungsschiene 2 in einer Bowdenzughülle 8 geführt. Der Anschlussbereich 24 ist in Bezug auf die Schienenlängsrichtung L1 zwischen dem oberen Endabschnitt 21 und dem unteren Endabschnitt 22 der ersten Führungsschiene 2 gelegen. Der Anschlussbereich 24 kann beispielsweise durch eine einstückig mit der ersten Führungsschiene ausgebildete Montagestruktur wie ein Ansatz oder Vorsprung realisiert sein, wie dies in Fig. 2 beispielhaft dargestellt ist.

Wie insbesondere in Fig. 2 erkennbar ist, verläuft die Bowdenzughülle 8 bogenförmig zwischen dem oberen Endbereich 31 der zweiten Führungsschiene 3 und dem Anschlussbereich 24 der ersten Führungsschiene 2. Die Bowdenzughülle 8 ist an der ersten Führungsschiene 2 in dem Anschlussbereich 24 an einer Anschlussstelle oder Befestigungsstelle befestigt. Beispielsweise kann die Bowdenzughülle 8 mit Endhülsen 81, 82 versehen sein, wobei eine erste Endhülse 81 an der Anschlussstelle im Anschlussbereich 24 der ersten Führungsschiene 2 und eine zweite Endhülse 82 an der zweiten Führungsschiene 3 befestigt, z.B. verschraubt ist, wie in Fig. 2 beispielhaft dargestellt. Eine Länge der Bowdenzughülle 8 ist aufgrund des bogenförmigen Verlaufs länger als ein kürzester Abstand zwischen den Befestigungsstellen der Endhülsen 81, 82 an der jeweiligen Führungsschiene 2, 3. Die Bowdenzughülle 8 kann insbesondere aus einem Kunststoffmaterial gebildet sein.

Wie in den Fign. 1 und 2 symbolisch dargestellt, ist die Anschlussstelle, an welcher die Bowdenzughülle 8 in dem Anschlussbereich 24 der ersten Führungsschiene 2 befestigt ist, in einem Abstand d24 zu dem unteren ersten Seilumlenker 25B angeordnet. Der Abstand d24 kann insbesondere entlang der Schienenlängsrichtung L100 zwischen der Anschlusstelle und einer Oberfläche des unteren ersten Seilumlenkers 25B, an der das Antriebsseil 7 geführt ist und die in Bezug auf die Schienenlängsrichtung L1 abgewandt von der Anschlussstelle gelegen ist, gemessen werden, wie dies in Fig. 2 schematisch dargestellt ist.

In Fig. 2 ist beispielhaft dargestellt, dass der Anschlussbereich 24 bzw. die Anschlussstelle in Bezug auf die Schienenlängsrichtung L1 etwas außermittig, näher bei dem ersten oberen Umlenker 25A als bei dem ersten unteren Umlenker 25B angeordnet ist. Beispielsweise kann der Abstand d24 zwischen dem unteren ersten Seilumlenker 25B und der Befestigungsstelle der Bowdenzughülle 8 an der ersten Führungsschiene 2 zwischen 55 Prozent und 70 Prozent des Abstands d25 zwischen dem oberen ersten Seilumlenker 25A und dem unteren ersten Seilumlenker 25B betragen. Der Abstands d25 zwischen dem oberen ersten Seilumlenker 25A und dem unteren ersten Seilumlenker 25B kann insbesondere entlang der Schienenlängsrichtung L1 zwischen der Oberfläche des unteren ersten Seilumlenkers 25B, an der das Antriebsseil 7 geführt ist und die in Bezug auf die Schienenlängsrichtung L1 abgewandt von der Anschlussstelle gelegen ist, und einer Oberfläche des oberen ersten Seilumlenkers 25A, an der das Antriebsseil 7 geführt ist und die in Bezug auf die Schienenlängsrichtung L1 abgewandt von der Anschlussstelle gelegen ist, gemessen werden, wie dies in Fig. 2 beispielhaft dargestellt ist. Generell kann der Abstand d24 zwischen dem unteren ersten Seilumlenker 25B und der Befestigungsstelle der Bowdenzughülle 8 an der ersten Führungsschiene 2 zwischen 25 Prozent und 75 Prozent des Abstands d25 zwischen dem oberen ersten Seilumlenker 25A und dem unteren ersten Seilumlenker 25B betragen.

Wie insbesondere in Fig. 2 erkennbar ist, kann durch die Befestigung der Bowdenzughülle 8 im Anschlussbereich 24 an der ersten Führungsschiene 2 zwischen dem oberen und dem unteren ersten Seilumlenker 25A, 25B eine relativ kurze Bogenlänge der Bowdenzughülle 8 realisiert werden, wodurch infolge von Setzungsprozessen der Bowdenzughülle 8 entstehende Seillosen vorteilhaft verkürzt werden. Ferner kann zwischen der Befestigungsstelle der Bowdenzughülle 8 an der ersten Führungsschiene 2 und der unteren ersten Umlenkrolle 25B vorteilhaft eine relativ straffe Seilführung des Antriebsseils 7 realisiert werden. Dies ist insbesondere der Fall, wenn der Abstand d24 zwischen dem unteren ersten Seilumlenker 25B und der Befestigungsstelle der Bowdenzughülle 8 an der ersten Führungsschiene 2 zwischen 25 Prozent und 75 Prozent des Abstands d25 zwischen dem oberen ersten Seilumlenker 25A und dem unteren ersten Seilumlenker 25B beträgt.

Wie bereits erläutert wurde, zeigt Fig. 1 die Anordnung der Scheibe 120 in einer Schließstellung oder Schließposition. In der Schließsstellung der Fensterscheibe 120 sind die Gleitstücke 4, 5 des Fensterhebersystems 1 in einer Anschlagposition angeordnet. In der Anschlagposition sind die Gleitstücke 4, 5 in Bezug auf die Schienenlängsrichtung L1 im oberen Endbereich 21, 31 der jeweiligen Führungsschiene 2, 3 angeordnet. Wie Fig. 1 erkennbar ist, liegt in der Anschlagposition das zweite Gleitstück 5 gegebenenfalls an dem zweiten Anschlag 30 an und das erste Gleitstück 4 ist in einem vorbestimmten Abstand d4 zu dem ersten Anschlag 20 angeordnet. Diese Beabstandung stellt sicher, dass die auf das erste Gleitstück 4 ausgeübte Zugkraft durch den zweiten Seilabschnitt 72 zuverlässig auf das zweite Gleitstück 5 übertragen wird, wenn die Fensterscheibe 120 in die Schließposition bewegt wird, wie dies oben erläutert wurde. Konkret kann der vorbestimmte Abstand d4 größer oder gleich 2 mm und kleiner oder gleich 8 mm, vorzugsweise größer oder gleich 3 mm und kleiner oder gleich 6 mm sein. Diese Abstandsbereiche haben sich als besonders vorteilhaft erwiesen, da in diesem Bereichen sichergestellt ist, dass selbst bei einer erheblichen Setzung der Bowdenzughülle 8 ein Anschlagen des ersten Gleitstücks 4 an den ersten Anschlag zuverlässig vermieden wird.

Im Falle einer Längenänderung der Bowdenzughülle 8 ist das erste Gleitstück 4 in der Anschlagposition A gegebenenfalls näher an dem ersten Anschlag 20 gelegen, als dies im ursprünglichen Auslegungszustand vorgesehen war. Dies führt zu einer Verkippung der Fensterscheibe 120, da die Gleitstücke 4, 5 in Bezug auf die Türhochrichtung H100 nicht mehr auf dem nach der Auslegung vorgesehenen Niveau angeordnet sind. Insbesondere dem voranstehend genannten Abstandsfenster des Abstands d4 von größer gleich 3 mm bis kleiner gleich 6 mm lässt sich einerseits ein großer Bereich von Längenänderungen der Bowdenzughülle 8 ausgleichen, wobei die resultierende Scheibenverkippung auf ein tolerierbares Maß begrenzt ist.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

### Bezugszeichenliste

- 1: Fensterhebersystem
- 2: erste Führungsschiene
- 3: zweite Führungsschiene
- 4: erstes Gleitstück
- 5: zweites Gleitstück
- 6: Seiltrommel
- 7: Antriebsseil
- 8: Bowdenzughülle
- 9: Elektromotor

- 20: erster Anschlag
- 21: oberer Endbereich der ersten Führungsschiene
- 22: unterer Endbereich der ersten Führungsschiene
- 23: Profilabschnitt der ersten Führungsschiene
- 24: Anschlussbereich der ersten Führungsschiene
- 25A: oberen erster Seilumlenker
- 25B: unterer erster Seilumenker
- 30: zweiter Anschlag
- 31: oberer Endbereich der zweiten Führungsschiene
- 32: unterer Endbereich der zweiten Führungsschiene
- 33: Profilabschnitt der zweiten Führungsschiene
- 35A: oberer zweiter Seilumlenker
- 35B: unterer zweiter Seilumlenker
- 41: Führungsabschnitt des ersten Gleitstücks
- 42: Kopplungsabschnitt des ersten Gleitstücks
- 43: Zugabschnitt des ersten Gleitstücks
- 51: Führungsabschnitt des zweiten Gleitstücks
- 52: Kopplungsabschnitt des zweiten Gleitstücks
- 53: Zugabschnitt des zweiten Gleitstücks
- 60: Basisplatte
- 71: erster Seilabschnitt des Antriebsseils
- 72: zweiter Seilabschnitt des Antriebsseils
- 81: erste Endhülse
- 82: zweite Endhülse

- 100: (Kraftfahrzeug-)Tür
- 105: Fensteröffnung
- 110: Rahmen
- 111: erste Strebe
- 112: zweite Strebe
- 113: Verbindungsstrebe
- 114: Basisbereich
- 120: Fensterscheibe
- 121: Vorderkante der Fensterscheibe
- 122: Hinterkante der Fensterscheibe
- 123: Oberkante
- 124: Unterkante
- 130: Führungsstruktur

- d4: Abstand
- d24: Abstand zwischen unterer erster Umlenkrolle und Befestigungsstelle der Bowdenzughülle an der ersten Führungsschiene
- d25: Abstand zwischen unterer erster Umlenkrolle und oberer erster Umlenkrolle
- L1: Schienenlängsrichtung
- L100: Türlängsrichtung
- H100: Türhochrichtung

## Patentansprüche

1. Kraftfahrzeugtüre (100),
mit einem Rahmen (110), welcher eine Fensteröffnung (105) definiert, wobei die Fensteröffnung (105) in Bezug auf eine Türlängsrichtung (L100) durch eine erste Strebe (111) und eine beabstandet zu dieser angeordnete zweite Strebe (112) begrenzt ist;
mit einem Fensterhebersystem (1) mit einer in Bezug auf die Türlängsrichtung (L100) im Bereich der ersten Strebe (111) angeordneten ersten Führungsschiene (2), einem an der ersten Führungsschiene (2) geführten ersten Gleitstück (4), einer in Bezug auf die Türlängsrichtung (L100) im Bereich der zweiten Strebe (112) angeordneten zweiten Führungsschiene (3), einem an der zweiten Führungsschiene (3) geführten zweiten Gleitstück (5), einer Seiltrommel (6) und einem mittels der Seiltrommel (6) antreibbaren und an die Gleitstücke (4; 5) gekoppelten Antriebsseil (7), welches zwischen einem oberen Endbereich (31) der zweiten Führungsschiene (3) und einem zwischen einem oberen Endbereich (21) der ersten Führungsschiene (2) und einem unteren Endbereich (22) der ersten Führungsschiene (2) gelegenen Anschlussbereich (24) in einer Bowdenzughülle (8) geführt ist, wobei die Bowdenzughülle (8) jeweils im oberen Endbereich (31) der zweiten Führungsschiene (3) und im Anschlussbereich (24) der ersten Führungsschiene (2) befestigt ist;
mit einer an die Gleitstücke (4; 5) des Fensterhebersystems (1) gekoppelten Fensterscheibe (120), welche eine entlang der zweiten Strebe (112) geführte Hinterkante (122) und eine schräg zu der Hinterkante (122) verlaufende Vorderkante (121) aufweist;
wobei die Fensterscheibe (120) mittels der Gleitstücke (4; 5) in eine Schließposition bewegbar ist, in welcher die Fensterscheibe (120) die Fensteröffnung (105) abdeckt, wobei in der Schließposition der Fensterscheibe (120) das erste Gleitstücke (4) im oberen Endbereich (21) der ersten Führungsschiene (2) und das zweite Gleitstück (5) im oberen Endbereich (31) der zweiten Führungsschiene (3) angeordnet ist; und
wobei die erste Führungsschiene (2) in dem oberen Endbereich (21) einen ersten Anschlag (20) aufweist und die zweite Führungsschiene (3) in dem oberen Endbereich (31) einen zweiten Anschlag (30) aufweist, wobei in der Schließposition der Fensterscheibe (120) das zweite Gleitstück (5) an dem zweiten Anschlag (30) anliegt und das erste Gleitstück (4) in einem vorbestimmten Abstand (d4) zu dem ersten Anschlag (20) angeordnet ist.

2. Kraftfahrzeugtüre nach Anspruch 1,
**dadurch gekennzeichnet,**
**dass** ein erster Seilabschnitt (71) des Antriebsseils (7) an das erste Gleitstück (4) gekoppelt ist, über einen im oberen Endbereich (21) der ersten Führungsschiene (2) angeordneten oberen ersten Seilumlenker (25A) zu der Seiltrommel (6) und von dieser über einen in einem unteren Endbereich (32) der zweiten Führungsschiene (3) angeordneten unteren zweiten Seilumlenker (35B) zu dem zweiten Gleitstück (5) geführt ist und an das zweite Gleitstück (5) gekoppelt ist.

3. Kraftfahrzeugtüre nach Anspruch 2,
**dadurch gekennzeichnet,**
**dass** ein zweiter Seilabschnitt (72) des Antriebsseils (7) an das zweite Gleitstück (5) gekoppelt ist, über einen im oberen Endbereich (31) der zweiten Führungsschiene (3) angeordneten oberen zweiten Seilumlenker (35A) und über einen im unteren Endbereich (22) der ersten Führungsschiene (2) angeordneten unteren ersten Seilumlenker (25B) zu dem ersten Gleitstück (4) geführt ist und an das erste Gleitstück (4) gekoppelt ist.

4. Kraftfahrzeugtüre nach Anspruch 3,
**dadurch gekennzeichnet,**
**dass** die Bowdenzughülle (8) in dem Anschlussbereich (24) in einem Abstand (d24) zu dem unteren ersten Seilumlenker (25B) angeordnet ist, welcher zwischen 25 Prozent und 75 Prozent eines Abstands (d25) zwischen dem oberen ersten Seilumlenker (25A) und dem unteren ersten Seilumlenker (25B) beträgt.

5. Kraftfahrzeugtüre nach einem der Ansprüche 2 bis 4,
**dadurch gekennzeichnet,**
**dass** einer oder mehrere der Seilumlenker (25A; 25B; 35A; 35B) als Umlenkrollen ausgebildet sind.

6. Kraftfahrzeugtüre nach einem der voranstehenden Ansprüche,
**dadurch gekennzeichnet,**
**dass** der vorbestimmte Abstand (d4) größer oder gleich 2 mm und kleiner oder gleich 8 mm ist, vorzugsweise größer oder gleich 3 mm und kleiner oder gleich 6 mm ist.

7. Kraftfahrzeugtüre nach einem der voranstehenden Ansprüche,
**dadurch gekennzeichnet,**
**dass** der erste Anschlag (20) einstückig mit der ersten Führungsschiene (2) ausgebildet ist und/oder dass der zweite Anschlag (30) einstückig mit der zweiten Führungsschiene (3) ausgebildet ist.

8. Kraftfahrzeugtüre nach einem der voranstehenden Ansprüche,
**dadurch gekennzeichnet,**
**dass** die Fensterscheibe (120) an der Hinterkante (112) durch eine Führungsstruktur (130) entlang der zweiten Strebe (112) geführt ist.

9. Kraftfahrzeugtüre nach Anspruch 8,
**dadurch gekennzeichnet,**
**dass** sich die Führungsstruktur (130) parallel zu der zweiten Führungsschiene (3) erstreckt.

10. Kraftfahrzeugtüre nach einem der voranstehenden Ansprüche,
**dadurch gekennzeichnet,**
**dass** die Bowdenzughülle (8) bogenförmig zwischen dem oberen Endbereich (31) der zweiten Führungsschiene (3) und dem Anschlussbereich (24) der ersten Führungsschiene (2) verläuft und an der ersten Führungsschiene (2) in dem Anschlussbereich (24) an einer Anschlussstelle oder Befestigungsstelle befestigt ist.

## Claims

1. Motor vehicle door (100),
having a frame (110) which defines a window opening (105), wherein the window opening (105) is delimited, in relation to a door longitudinal direction (L100), by a first bar (111) and a second bar (112) spaced apart from the first bar;
having a window-raising system (1) with a first guide rail (2) arranged, in relation to the door longitudinal direction (L100), in the region of the first bar (111), a first slide piece (4) guided on the first guide rail (2), a second guide rail (3) arranged, in relation to the door longitudinal direction (L100), in the region of the second bar (112), a second slide piece (5) guided on the second guide rail (3), a cable drum (6) and a drive cable (7) which can be driven by means of the cable drum (6), is coupled to the slide pieces (4; 5) and is guided in a Bowden cable sheath (8) between an upper end region (31) of the second guide rail (3) and a connection region (24) located between an upper end region (21) of the first guide rail (2) and a lower end region (22) of the first guide rail (2), wherein the Bowden cable sheath (8) is attached in each case in the upper end region (31) of the second guide rail (3) and in the connection region (24) of the first guide rail (2);
having a window pane (120) coupled to the slide pieces (4; 5) of the window-raising system (1) and comprising a rear edge (122) guided along the second bar (112) and a front edge (121) extending in an inclined manner with respect to the rear edge (122);
wherein the window pane (120) can be moved into a closed position by means of the slide pieces (4; 5), the window pane (120) covering the window opening (105) in the closed position, wherein when the window pane (120) is in the closed position the first slide piece (4) is arranged in the upper end region (21) of the first guide rail (2) and the second slide piece (5) is arranged in the upper end region (31) of the second guide rail (3); and
wherein the first guide rail (2) has a first stop (20) in the upper end region (21) and the second guide rail (3) has a second stop (30) in the upper end region (31), wherein when the window pane (120) is in the closed position the second slide piece (5) lies against the second stop (30) and the first slide piece (4) is arranged at a predetermined distance (d4) to the first stop (20).

2. Motor vehicle door as claimed in claim 1, **characterised in that**
a first cable portion (71) of the drive cable (7) is coupled to the first slide piece (4), is guided to the cable drum (6) via an upper first cable deflector (25A) arranged in the upper end region (21) of the first guide rail (2), and from there is guided to the second slide piece (5) via a lower second cable deflector (35B) arranged in a lower end region (32) of the second guide rail (3), and is coupled to the second slide piece (5).

3. Motor vehicle door as claimed in claim 2, **characterised in that**
a second cable portion (72) of the drive cable (7) is coupled to the second slide piece (5), is guided to the first slide piece (4) via an upper second cable deflector (35A) arranged in the upper end region (31) of the second guide rail (3) and via a lower first cable deflector (25B) arranged in the lower end region (22) of the first guide rail (2), and is coupled to the first slide piece (4).

4. Motor vehicle door as claimed in claim 3, **characterised in that**
the Bowden cable sheath (8) is arranged in the connection region (24) at a distance (d24) to the lower first cable deflector (25B), which distance is between 25 percent and 75 percent of a distance (d25) between the upper first cable deflector (25A) and the lower first cable deflector (25B) .

5. Motor vehicle door as claimed in any one of claims 2 to 4,
**characterised in that**
one or more of the cable deflectors (25A; 25B; 35A; 35B) are formed as deflection rollers.

6. Motor vehicle door as claimed in any one of the preceding claims, **characterised in that**
the predetermined distance (d4) is greater than or equal to 2 mm and less than or equal to 8 mm, preferably greater than or equal to 3 mm and less than or equal to 6 mm.

7. Motor vehicle door as claimed in any one of the preceding claims, **characterised in that**
the first stop (20) is formed in one piece with the first guide rail (2) and/or **in that** the second stop (30) is formed in one piece with the second guide rail (3).

8. Motor vehicle door as claimed in any one of the preceding claims, **characterised in that**
the window pane (120) is guided on the rear edge (112) by a guide structure (130) along the second bar (112).

9. Motor vehicle door as claimed in claim 8, **characterised in that**
the guide structure (130) extends in parallel with the second guide rail (3).

10. Motor vehicle door as claimed in any one of the preceding claims, **characterised in that**
the Bowden cable sheath (8) extends in an arcuate manner between the upper end region (31) of the second guide rail (3) and the connection region (24) of the first guide rail (2) and is attached to the first guide rail (2) in the connection region (24) at a connection point or attachment point.

## Revendications

1. Portière de véhicule automobile (100)
comportant un encadrement (110) définissant une ouverture de vitre (105), l'ouverture de vitre (105) étant délimitée, par rapport à une direction longitudinale de portière (L100), par un premier montant (111) et un second montant (112) agencé à distance de celui-ci ;
comportant un système de lève-vitre (1) avec un premier rail de guidage (2) agencé dans la zone du premier montant (111) par rapport à la direction longitudinale de portière (L100), un premier coulisseau (4) guidé sur le premier rail de guidage (2), un second rail de guidage (3) agencé dans la zone du second montant (112) par rapport à la direction longitudinale de portière (L100), un second coulisseau (5) guidé sur le second rail de guidage (3), un tambour de câble (6) et un câble d'entraînement (7) pouvant être entraîné au moyen du tambour de câble (6) et couplé aux coulisseaux (4 ; 5), lequel câble d'entraînement étant guidé entre une zone d'extrémité supérieure (31) du second rail de guidage (3) et une zone de liaison (24) située entre une zone d'extrémité supérieure (21) du premier rail de guidage (2) et une zone d'extrémité inférieure (22) du premier rail de guidage (2) dans une gaine de câble Bowden (8), dans laquelle la gaine de câble Bowden (8) est respectivement fixée dans la zone d'extrémité supérieure (31) du second rail de guidage (3) et dans la zone de liaison (24) du premier rail de guidage (2) ;
comportant une vitre de fenêtre (120) couplée aux coulisseaux (4 ;5 ) du système de lève-vitre (1), laquelle vitre de fenêtre présentant un bord arrière (122) guidé le long du second montant (112) et un bord avant (121) s'étendant de manière inclinée par rapport au bord arrière (122) ;
dans laquelle la vitre de fenêtre (120) peut être amenée dans une position de fermeture au moyen des coulisseaux (4 ; 5), position dans laquelle la vitre de fenêtre (120) recouvre l'ouverture de vitre (105), dans laquelle, dans la position de fermeture de la vitre de fenêtre (120), le premier coulisseau (4) est agencé dans la zone d'extrémité supérieure (21) du premier rail de guidage (2) et le second coulisseau (5) est agencé dans la zone d'extrémité supérieure (31) du second rail de guidage (3) ; et
dans laquelle le premier rail de guidage (2) présente une première butée (20) dans la zone d'extrémité supérieure (21) et le second rail de guidage (3) présente une seconde butée (30) dans la zone d'extrémité supérieure (31), dans laquelle, dans la position de fermeture de la vitre de fenêtre (120), le second coulisseau (5) vient en butée contre la seconde butée (30) et le premier coulisseau (4) est agencé à une distance prédéfinie de la première butée (20) .

2. Portière de véhicule automobile selon la revendication 1,
**caractérisée en ce**
**qu'**une première portion de câble (71) du câble d'entraînement (7) est couplée au premier coulisseau (4), guidée par un premier renvoi de câble supérieur (25A) agencé dans la zone d'extrémité supérieure (21) du premier rail de guidage (2) jusqu'au tambour de câble (6) et à partir de celui-ci, par un second renvoi de câble inférieur (35B) agencé dans une zone d'extrémité inférieure (32) du second rail de guidage (3) jusqu'au second coulisseau (5) et couplée au second coulisseau (5).

3. Portière de véhicule automobile selon la revendication 2,
**caractérisée en ce**
**qu'**une seconde portion de câble (72) du câble d'entraînement (7) est couplée au second coulisseau (5), guidée par un second renvoi de câble supérieur (35A) agencé dans la zone d'extrémité supérieure (31) du second rail de guidage (3) et par un premier renvoi de câble inférieur (25B) agencé dans la zone d'extrémité inférieure (22) du premier rail de guidage (2) jusqu'au premier coulisseau (4) et couplée au premier coulisseau (4).

4. Portière de véhicule automobile selon la revendication 3,
**caractérisée en ce**
**que** la gaine de câble de Bowden (8) est agencée dans la zone de liaison (24) à une distance (d24) du premier renvoi de câble inférieur (25B) qui est comprise entre 25 pour-cent et 75 pour-cent d'une distance (d25) entre le premier renvoi de câble supérieur (25A) et le premier renvoi de câble inférieur (25B).

5. Portière de véhicule automobile selon l'une des revendications 2 à 4, **caractérisée en ce**
**qu'**un ou plusieurs des renvois de câbles (25A ; 25B ; 35A ; 35B) sont réalisés sous forme de galets de renvoi.

6. Portière de véhicule automobile selon l'une des revendications précédentes,
**caractérisée en ce**
**que** la distance prédéfinie (d4) est supérieure ou égale à 2 mm et inférieure ou égale à 8 mm, de préférence supérieure ou égale à 3 mm et inférieure ou égale à 6 mm.

7. Portière de véhicule automobile selon l'une des revendications précédentes,
**caractérisée en ce**
**que** la première butée (20) est formée solidaire du premier rail de guidage (2) et/ou la seconde butée (30) est formée solidaire du second rail de guidage (3).

8. Portière de véhicule automobile selon l'une des revendications précédentes,
**caractérisée en ce**
**que** la vitre de fenêtre (120) est guidée sur le bord arrière (112) par une structure de guidage (130) le long du second montant (112).

9. Portière de véhicule automobile selon la revendication 8,
**caractérisée en ce**
**que** la structure de guidage (130) s'étend parallèlement au second rail de guidage (3).

10. Portière de véhicule automobile selon l'une des revendications précédentes,
**caractérisée en ce**
**que** la gaine de câble Bowden (8) s'étend en forme d'arc entre la zone d'extrémité supérieure (31) du second rail de guidage (3) et la zone de liaison (24) du premier rail de guidage (2), et est fixée au premier rail de guidage (2) dans la zone de liaison (24) à un emplacement de liaison ou à un emplacement de fixation.
